# EUROPEAN PATENT SPECIFICATION

(11) **EP 2 460 410 B1**
(45) Date of publication and mention of the grant of the patent: **23.07.2014**
(21) Application number: 10193597.1
(22) Date of filing: 03.12.2010
(51) Int. Cl.: A21C 3/02

(54) **Device and method for lapping dough**
Vorrichtung und Verfahren zur Überlappung von Teig
Dispositif et procédé pour laminer de la pâte

(43) Date of publication of application: 06.06.2012
(73) Proprietor: Rademaker B.V., 4104 BC Culemborg (NL)
(72) Inventor: van Blokland, Johannes Josephus Antonius, 4112 JH Beusichem (NL)
(74) Representative: van Oeffelt, Abraham

(56) References cited:
- EP-A2- 0 124 487
- US-A- 1 482 195
- US-A- 1 762 268
- US-A- 2 130 097
- US-A- 2 642 013
- US-A- 3 216 374
- US-A- 3 698 309
- US-A- 3 851 088
- US-A- 4 004 035

## Description

The present invention relates to a method and device for lapping dough, in order to obtain a laminated dough, also referred to as puff paste. Devices for this purpose are also referred to as lappers or laminators, and they are well known in the art.

Their general principle is to apply dough in a zig-zag manner on a substrate. For that purpose, it has been common practice to have a swinging device, with an upstream side that has an axis of rotation, and a downstream side that traverses the substrate alternatingly. In its most simple embodiment, the swinging device comprises a pair of guidances, such as plates, to guide a dough sheet in between them. This concept has proven to work for a limited width of a dough sheet. When the sheet becomes larger, friction between the sheet and the guidance prevents the dough from sliding over and away from the guidance. Improvements have been proposed.

The US patent 3851088 shows an example such improved device, wherein the dough is delivered from a hopper to a swing member with conveyor belts instead of guidance plates, which swing member deposits the dough to a substrate. In order to avoid damage of the dough, especially to avoid tearing it apart, the substrate is curved, to minimise the distance over which the dough falls freely to the substrate. The above device fulfills a certain need, but it has the disadvantage that curving the substrate implies certain design difficulties, especially when the lapped dough is to be conveyed to a further location.

This disadvantage was solved by a device disclosed in the CA patent application 365871. This application discloses a swing member comprising two conveyor belts, for conveying dough enclosed in between them, hinged around a common axis of rotation at their upstream end, wherein each belt describes a path along four rollers, wherein the length of the path wherein the belts enclose the dough is adjustable, and controlled to minimise the distance over which the dough falls freely to the substrate.

US 1 762 268 discloses a machine for rolling, folding and cross-rolling dough, wherein conveyor belts can be adjusted in accordance with the thickness of the sheet delivered from the rollers, to apply more or less pressure either at the receiving or delivering end of the conveyor belts.

The construction with the four rollers however, is disadvantageous because the side of the conveyor belts that conveys the dough, also contacts one of the rollers, and dough remainings can accumulate here. This disadvantage was solved by the US Patent 3 698 309, which proposes the use of two sequential swinging devices, each with a pair of conveyor belts that transport the dough in between. The lower pair of belts moves from the left to the right, in order to zig-zag the dough, while the higher pair lifts the lower pair in order to keep a constant distance to a conveyor for transporting the dough further on.

Although this latter construction offers advantages over earlier mentioned devices, further disadvantages remain. Effective solutions have been found to obtain a constant height between the swinging device and the substrate, but a remaining problem is that the gravity force on the dough is the highest at the position where the swinging device is in a neutral position, that is, a position where the dough is temporarily conveyed vertically. At this position a higher force is required to prevent the dough from tear. This force does not have a constant value, but it depends on the viscosity of the dough. It is a purpose of the present invention to solve this and other problems with respect to the prior art.

The invention thereto proposes a device for lapping dough, comprising a pair of mutually spaced conveyor belts, for conveying dough enclosed in between them, hinged around a common axis of rotation at their upstream end, a drive for swinging the pair of conveyor belts around the axis of rotation and a clamp, for applying an adjustable force between the mutually spaced conveyor belts.

The conveyor belts may be endless conveyor belts, and the terms "upstream" and "downstream" are used here and below, referring to the direction of conveyance of the dough, i.e. upstream is the direction the dough comes from, and downstream is the direction the dough moves to, when the device is in (normal) use. The pair of conveyor belts may be arranged in a frame, that can be swung together with the belts.

The space between the belts is adapted for the dough sheet to be conveyed in between them. The clamp may be embodied in its simplest form by an adjustable space between the conveyor belts, in order to use the device for various dough types with different viscosity, and to prevent dough from tearing, or with relatively fluid dough dough types.

The device further comprises a third conveyor belt, arranged upstream of the mutually spaced belts for feeding dough to the belts, hinged around an axis of rotation at or toward its upstream end, and comprising drive means to swing the third conveyor belt around its axis of rotation. When the hinge is not at the upstream end but toward that end, the third conveyor belt may comprise a first stretch, with a fixed direction of conveyance, and a second stretch, with a direction of conveyance that is at an adjustable angle with respect to the first stretch, the angle being adjustable around a horizontal axis.

The third conveyor belt and the pair of conveyor belts thus form a pair of mutually movable legs, forming a V or an L like-shape. The angle between the legs is varied, i.e. stretched and subtracted alternatingly to arrange the dough on a substrate in the zig-zag manner. Herein, the downstream end of the third conveyor belt is arranged in the vicinity of the upstream end of the pair of conveyor belts, in order to transfer the dough smoothly.

In a preferred embodiment however, the clamp comprises at least one guidance plate arranged at the backside of at least one of the conveyor belts, the plate provided with an actuator for excerting a force on the conveyor belt, in the direction of the other conveyor belt.

This embodiment has the advantage that the pressure or force can be regulated instantaneously, and in dependence of the conveyed dough. A sensor and a feedback loop may be present to adjust the force, or the force may be configured at a predetermined value, dependant on the type or amount of dough used. The guidance plate supports the conveyor belt and thus generates a pressure toward the dough and/or the other conveyor belt of the pair of belts.

In a further preferred embodiment, the clamp comprises two guidance plates, each plate arranged at the backside of a respective conveyor belt, and each plate provided with an actuator for excerting a force on the at least one belt, in the direction of the other belt.

When the actuators are enabled, both guidance plates are moved toward each other, forcing the conveyor belts toward the dough sheet in between them. The guidance plates have a low friction coefficient, so that a toothed conveyor belts may be chosen for this purpose.

In a practical realisation, the guidance plates are hinged at one of their ends, so that a force can be excerted by rotating the guidance plate around its axis of rotation, and with respective hinges at opposite sides, thus remaining parallel to each other during exertion of a force. The actuator can for example be embodied by a pneumatic cylinder. These actuators can be precisely controlled, and do not require greasing or other maintenance that may pollute the dough.

In a further embodiment, the device comprises a fourth conveyor belt, arranged at the downstream end of the pair of conveyor belts, for receiving dough conveyed by the pair of conveyor belts, wherein the drive of the third conveyor belt and the drive of the pair of conveyor belts are configured to move the downstream end of the pair of conveyor belts alternatively away from and toward the upstream end of the third conveyor belt, for applying dough in a zig-zag manner on the fourth conveyor belt. Said fourth conveyor belt is most preferably arranged perpendicular to the direction of conveyance of the third conveyor belt.

Like it is done in the prior art, the drive means in the device according to the invention are configured to keep the downstream end of the pair of conveyor belts at a fixed distance from the fourth conveyor belt. This is to keep the distance over which the dough is freely falling constant. Since the pair of conveyor belts is in a preferred embodiment solely supported at its axis of rotation, the downstream end thereof thus "hovering".

This has the great advantage that all parts of the machine below, and in particular the area around the fourth conveyor, can be reached for maintenance, error solution, and cleaning purposes. For safety reasons a cage may be placed around the working area of the third conveyor and the pair of conveyor belts to avoid people having contact with the moving parts of the device. This cage can be designed with rather large openings, so that removal thereof is not required for cleaning the device.

In a further preferred embodiment, the drive of the pair of conveyor belts comprises a drive shaft, coupled to an actuator outside a dough conveyance area, for swinging the pair of conveyor belts. The actuator may be an electric motor or the like. This motor is arranged outside the working area of the conveyor belts as well, for keeping the working area of the machine clear, and free of lubricants and the like.

The same goes for a drive for driving the pair of conveyor belts and also for driving the third conveyor belt for conveying the dough, which may be situated outside a dough conveyance area. A transmission may thereto comprise a toothed belt which is led aside the pair of conveyor belts.

As explained above, the use of conveyor belts instead of a plate is in particular relevant when the swinging path of the dough transporting section of the pair of conveyor belts becomes larger. According to the invention, this width is between 60 and 200 cm, and in particular between 80 and 160 cm.

In a further embodiment of the present invention the pair of conveyor belts is balanced for their horizontal support by a suspension. The suspension could for instance be a pneumatic suspension.

The invention will now be elaborated into more detail with reference to the following figures, wherein:
- Figure 1 shows the general principle of a device for lapping dough according to the present invention;
- Figure 2 shows a side view of a device for lapping dough according to the invention;
- Figure 3 shows a top view on the device from figure 2.
- Figure 4 shows a perspective view of the device of figures 2 and 3.

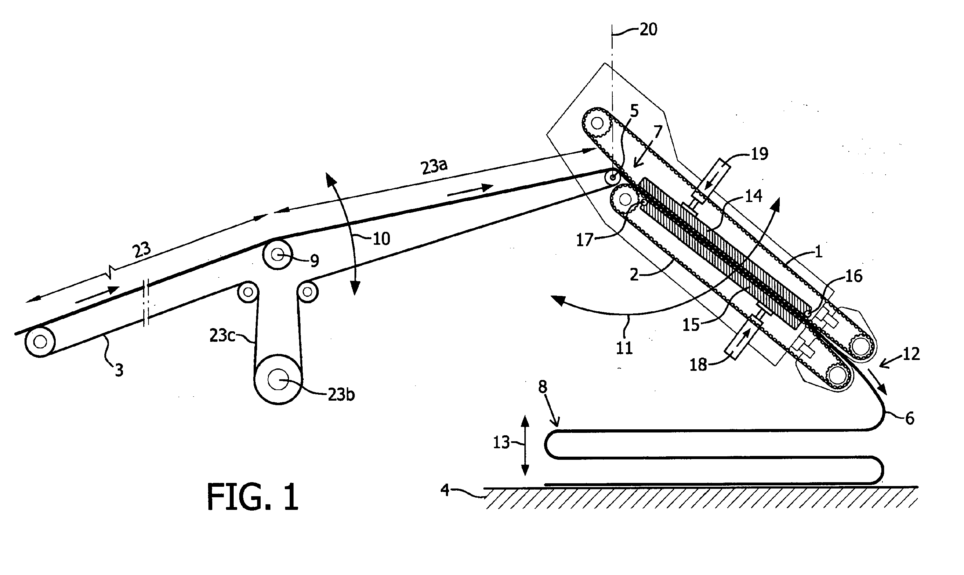

Figure 1 shows the general principle of a device for lapping dough according to the present invention. The device comprises a pair of mutually spaced conveyor belts 1, 2, for conveying dough 6 enclosed in between them, hinged around a common axis of rotation 5 at their upstream end 7. Not depicted is a drive for swinging the pair of conveyor belts around the axis of rotation. Figure 1 further shows a third conveyor 3 for delivering the dough to the pair of conveyors 1,2, and a fourth conveyor 4 for receiving the lapped dough 8. The upstream end 7 of the pair of conveyor belts 1, 2 is hinged at the downstream end of the third conveyor 3, which itself is hinged around an axis of rotation 9 toward its upstream end. By swinging 10 the third conveyor belt 3 around its axis of rotation 9, and swinging 11 the pair of conveyor belts 1, 2 around axis of rotation 5, the downstream end 12 of the pair of conveyor belts 1, 2 describes a path 13 with a constant distance to a fourth conveyor 4, on which the dough 6 is lapped 8. According to the present invention, the path 13 may have a width of more than 0.6 meter, in particular even 1,20 meter or more, and in specific cases even 1,60 meter and higher. Finally, a clamp 14, 15 is depicted, for applying an adjustable force between the mutually spaced conveyor belts 1, 2. The clamp 14, 15 comprises two parts, 14, 15, which are arranged rotatable around respective axis of rotation 16, 17. In order to actuate the clamp, forces 18, 19 can be applied to the parts 14, 15, which may for example be guidance plates. The forces 18, 19 are adjustable according to the invention, and may be coupled by control means (not depicted) to the viscosity of the dough. It may also be coupled to the rotational angle of the pair of conveyor belts 1, 2. When the pair of conveyor belts 1, 2 is in the vertical position 20, a maximum of effective gravity force acts on the dough, and the clamping force may thereto controlled to be the highest in this position. The third conveyor 3 comprises an upstream (first) stretch, with a first fixed direction of conveyance, which is in the example given arranged slightly inclined, and a downstream (second) stretch 23a, which can be rotated around essentially horizontal axis of rotation 9. In figure 1, a driving roller 23b arranged in a loop 23c is also depicted.

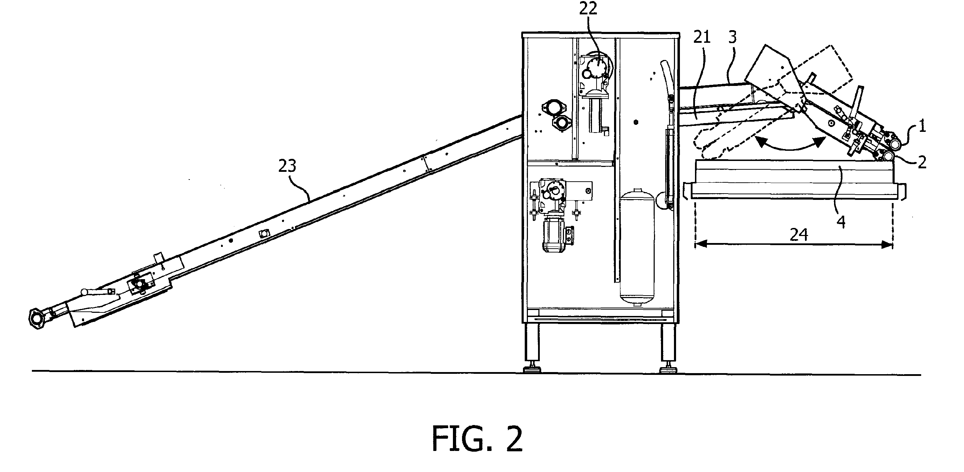

Figure 2 shows a side view of an actual embodiment of a device according to the present invention. Besides the parts shown in figure 1, figure 2 shows a connecting rod 21, for swinging the pair of conveyor belts 1, 2. The rod is operated by a motor 22, arranged outside the dough processing area, in order to avoid pollution of the dough.

Also depicted in figure 2 is a pneumatic reservoir, which is used for powering at least one pneumatic cylinder that counterbalances (the frame comporting) the pair of conveyor belts 1, 2 and the third conveyor belt. Other counter balancing means may be applied as well, in order to relieve the drives for the swinging movements. As can be seen, the width of the swing movement 24 of the downstream end of the pair of conveyor belts is 120 cm.

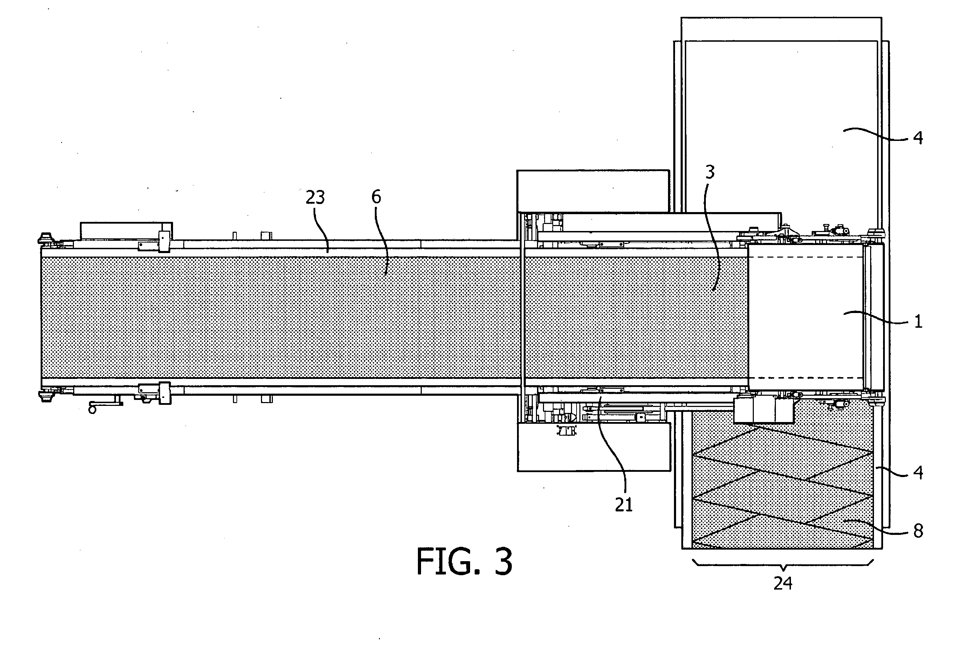

Figure 3 shows a top view on the machine from figures 1 and 2. The figure shows in particular how the dough sheet 6 is zig-zagged 8 on the fourth conveyor 4. Also visible in the figure is the connecting rod 21, which transfers the swinging movement of the pair of conveyor belts, from the motor placed outside 22 the dough processing area to a frame carrying the conveyor belts 1,2.

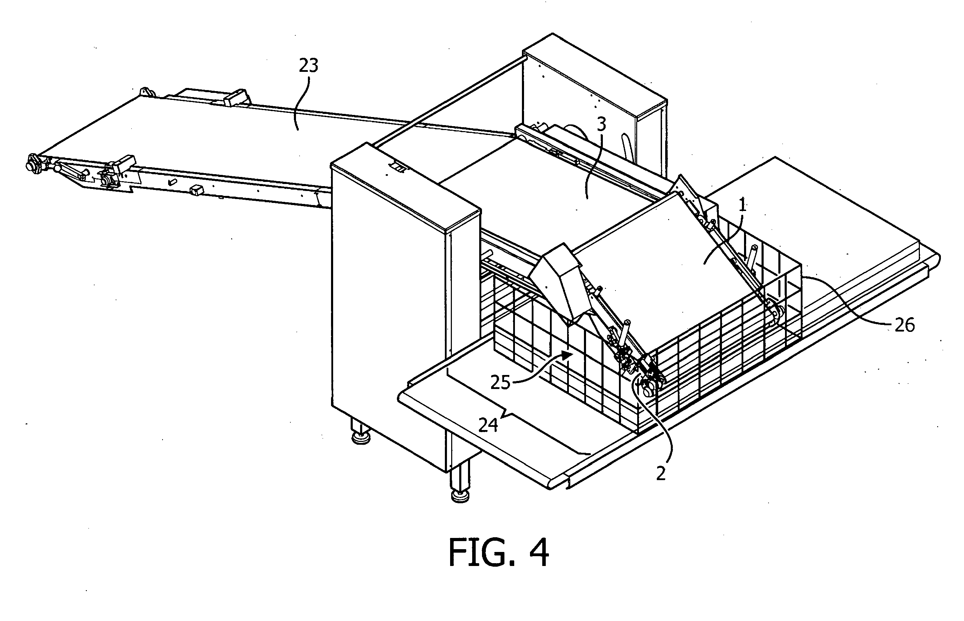

Figure 4 shows a perspective view on the device shown in figures 2 and 3. In the figure, like reference numbers indicate like components. Clearly visible is the hovering or floating construction, providing a free space 25 around the pair of conveyor belts, which enables easy maintenance and cleaning. For safety reasons, a cage 26 may be present to shield the moving parts from the device.

## Claims

1. Device for lapping dough, comprising:
- a pair of mutually spaced conveyor belts (1, 2), for conveying dough (6) enclosed in between them, hinged around a common axis of rotation (5) at their upstream end (7);
- a drive for swinging the pair of conveyor belts around the axis of rotation;
- a clamp (14, 15), for applying an adjustable force between the mutually spaced conveyor belts (1, 2);
- a third conveyor belt (3),
• arranged upstream of the mutually spaced belts (1, 2) for feeding dough to the belts;
• hinged around an axis of rotation (9) toward its upstream end; and
• comprising drive means to swing (10) the third conveyor belt (3) around its axis of rotation (9);
wherein the upstream end (7) of the pair of conveyor belts (1, 2) is hinged at the downstream end of the third conveyor belt (3).

2. Device according to claim 1, wherein the clamp (14, 15) comprises at least one guidance plate (14, 15) arranged at the backside of at least one of the pair of mutually spaced conveyor belts (1, 2), the plate provided with an actuator for exerting a force (18, 19) on the conveyor belt (1, 2), in the direction of the other conveyor belt (1, 2).

3. Device according to claim 2, wherein the clamp (14, 15) comprises two guidance plates (14, 15), each plate arranged at the backside of a respective conveyor belt (1, 2), and each plate provided with an actuator for exerting a force (18, 19) on the at least one belt, in the direction of the other belt.

4. Device according to claim 3, wherein the guidance plates (14, 15) hinge at opposite sides, thus remaining parallel to each other during exertion of a force.

5. Device according to claim 4, wherein the actuator is embodied by a pneumatic cylinder.

6. Device according to any of the preceding claims, comprising:
- a fourth conveyor belt (4), arranged at the downstream end of the pair of conveyor belts (1, 2), for receiving dough conveyed by the pair of conveyor belts (1, 2), wherein
- the drive of the third conveyor belt (3) and the drive of the pair of conveyor belts (1, 2) are configured to move the downstream end of the pair of conveyor belts alternatively away from and toward the upstream end of the third conveyor belt (3), for applying dough in a zig-zag manner on the fourth conveyor belt (4).

7. Device according to claim 6, wherein the drive means are configured to keep the downstream end of the pair of conveyor belts (1, 2) at a fixed distance from the fourth conveyor belt (4).

8. Device according to any of the preceding claims, wherein the pair of conveyor belts (1, 2) is solely supported at its axis of rotation, such that the conveyor belts can be reached for maintenance.

9. Device according to any of the preceding claim, wherein the drive for swinging the pair of conveyor belts (1, 2) comprises a drive shaft, coupled to an actuator outside a dough conveyance area.

10. Device according to any of the preceding claims, wherein a drive for driving the pair of conveyor belts (1, 2) for conveying the dough is situated outside a dough conveyance area.

11. Device according to claim 10, wherein a transmission for driving the conveyor belts for conveying the dough comprises a toothed belt.

12. Device according to any of the preceding claims, wherein the pair of conveyor belts (1, 2) is balanced for their horizontal support by a suspension.

13. Device according to claim 12, wherein the suspension is a pneumatic suspension.

14. Method for lapping dough, comprising:
- conveying dough enclosed in between a pair of mutually spaced conveyor belts (1, 2),
- swinging the pair of conveyor belts (1, 2) around an axis of rotation (5) towards their up-stream end (7),
- applying an adjustable force between the mutually spaced conveyor belts (1, 2), wherein the dough is conveyed to the pair of mutually spaced conveyor belts (1, 2) by a third conveyor belt (3) and
- swinging the third conveyor belt (3) around an axis of rotation (9) towards its up-stream end;
wherein the upstream end (7) of the pair of conveyor belts (1, 2) is hinged at the downstream end of the third conveyor belt (3).

## Patentansprüche

1. Vorrichtung zur Überlappung von Teig, umfassend:
- ein Paar voneinander beabstandeter Förderbänder (1, 2) zum Befördern von Teig (6) dazwischen, das um eine gemeinsame Drehachse (5) an seinem stromaufwärtigen Ende (7) klappbar ist;
- einen Antrieb zum Schwingen des Paars Förderbänder um die Drehachse;
- eine Klemme (14, 15) zum Anlegen einer verstellbaren Kraft zwischen den voneinander beabstandeten Förderbändern (1, 2);
- ein drittes Förderband (3),
• das stromaufwärts der voneinander beabstandeten Bänder (1, 2) angeordnet ist, um den Teig auf die Bänder zu geben;
• die um eine Drehachse (9) zum stromaufwärtigen Ende klappbar sind; und
• die ein Antriebsmittel (10) umfassen, um das dritte Förderband (3) um seine Drehachse (9) zu schwingen;
wobei das stromaufwärtige Ende (7) des Paars Förderbänder (1, 2) am stromabwärtigen Ende des dritten Förderbands (3) angeordnet ist.

2. Vorrichtung nach Anspruch 1, wobei die Klemme (14, 15) mindestens eine Führungsplatte (14, 15) umfasst, die an der Rückseite des mindestens einen Paars voneinander beabstandeter Förderbänder (1, 2) angeordnet ist, wobei die Platte mit einem Betätiger zum Ausüben einer Kraft (18, 19) auf das Förderband (1, 2) in Richtung des anderen Förderbands (1, 2) versehen ist.

3. Vorrichtung nach Anspruch 2, wobei die Klemme (14, 15) jeweils zwei Führungsplatten (14, 15) umfasst, wobei jeweils jede Platte an der Rückseite eines entsprechenden Förderbands (1, 2) angeordnet ist und jede Platte mit einem Betätiger zum Ausüben einer Kraft (18, 19) auf das mindestens eine Band in Richtung des anderen Bands versehen ist.

4. Vorrichtung nach Anspruch 3, wobei die Führungsplatten (14, 15) an gegenüberliegenden Seiten zusammenklappen, wodurch sie während des Ausübens einer Kraft parallel zueinander bleiben.

5. Vorrichtung nach Anspruch 4, wobei der Betätiger von einem pneumatischen Zylinder ausgeführt ist.

6. Vorrichtung nach einem der vorherigen Ansprüche, umfassend:
- ein viertes Förderband (4), das an einem stromabwärtigen Ende des Paars Förderbänder (1, 2) zum Aufnehmen von Teig angeordnet ist, der von dem Paar Förderbänder (1, 2) befördert wird, wobei
- der Antrieb des dritten Förderbands (3) und der Antrieb des Paars Förderbänder (1, 2) zum Bewegen des stromabwärtigen Endes des Paars Förderbänder alternativ weg und zu dem stromaufwärtigen Ende des dritten Förderbands (3) zum Auftragen von Teig in einem Zickzackmuster auf das vierte Förderband (4) konfiguriert ist.

7. Vorrichtung nach Anspruch 6, wobei die Antriebsmittel zum Halten des stromabwärtigen Endes des Paars Förderbänder (1, 2) in einem festen Abstand von dem vierten Förderband (4) konfiguriert ist.

8. Vorrichtung nach einem der vorherigen Ansprüche, wobei das Paar Förderbänder (1, 2) nur an seiner Drehachse gehalten wird, sodass die Förderbänder zur Wartung zugänglich sind.

9. Vorrichtung nach einem der vorherigen Ansprüche, wobei der Antrieb zum Schwingen des Paars Förderbänder (1, 2) eine Antriebswelle umfasst, die mit einem Betätiger außerhalb des Teigförderbereichs gekoppelt ist.

10. Vorrichtung nach einem der vorherigen Ansprüche, wobei ein Antrieb zum Antreiben des Paars Förderbänder (1, 2) zum Befördern des Teigs außerhalb eines Teigförderbereichs angeordnet ist.

11. Vorrichtung nach Anspruch 10, wobei ein Getriebe zum Antreiben der Förderbänder zum Befördern des Teigs einen Zahnriemen umfasst.

12. Vorrichtung nach einem der vorherigen Ansprüche, wobei das Paar Förderbänder (1, 2) für die horizontale Abstützung von einer Aufhängung ausgeglichen wird.

13. Vorrichtung nach Anspruch 12, wobei die Aufhängung eine pneumatische Aufhängung ist.

14. Verfahren zur Überlappung von Teig, umfassend:
- Befördern von Teig, der zwischen einem Paar voneinander beabstandeter Förderbänder (1, 2) eingeschlossen ist;
- Schwingen des Paars Förderbänder (1, 2) um eine Drehachse (5) zu ihrem stromaufwärtigen Ende (7);
- Anlegen einer verstellbaren Kraft zwischen voneinander beabstandeten Förderbändern (1, 2), wobei der Teig zu dem Paar voneinander beabstandeten Förderbändern (1, 2) von einem dritten Förderband (3) befördert wird; und
- Schwingen des dritten Förderbands (3) um eine Drehachse (9) zu seinem stromaufwärtigen Ende;
wobei das stromaufwärtige Ende (7) des Paars Förderbänder (1, 2) an einem stromabwärtigen Ende des dritten Förderbands (3) klappbar ist.

## Revendications

1. Dispositif pour laminer de la pâte, comprenant :
- une paire de courroies de transport (1, 2) mutuellement espacées, destinées à transporter de la pâte (6) prise en sandwich entre celles-ci, articulées autour d'un axe de rotation commun (5) au niveau de leur extrémité amont (7) ;
- un système d'entraînement destiné à faire osciller la paire de courroies de transport autour de l'axe de rotation ;
- une mâchoire (14, 15), destinée à appliquer une force ajustable entre les courroies de transport (1, 2) mutuellement espacées ;
- une troisième courroie de transport (3),
• disposée en amont des courroies (1, 2) mutuellement espacées et destinée à amener de la pâte aux courroies ;
• articulée autour d'un axe de rotation (9) vers son extrémité amont ; et
• comprenant des moyens d'entraînement pour faire osciller (10) la troisième courroie de transport (3) autour de son axe de rotation (9) ;
dans lequel l'extrémité amont (7) de la paire de courroies de transport (1, 2) est articulée au niveau de l'extrémité aval de la troisième courroie de transport (3).

2. Dispositif selon la revendication 1, dans lequel la mâchoire (14, 15) comprend au moins une plaque de guidage (14, 15) disposée à l'arrière d'au moins l'une des courroies de la paire de courroies de transport (1, 2) mutuellement espacées, la plaque étant dotée d'un actionneur destiné à exercer une force (18, 19) sur la courroie de transport (1, 2), dans la direction de l'autre courroie de transport (1,2).

3. Dispositif selon la revendication 2, dans lequel la mâchoire (14, 15) comprend deux plaques de guidage (14, 15), chaque plaque étant disposée à l'arrière d'une courroie de transport (1, 2) respective, et chaque plaque étant dotée d'un actionneur destiné à exercer une force (18, 19) sur la ou les courroies, dans la direction de l'autre courroie.

4. Dispositif selon la revendication 3, dans lequel les plaques de guidage (14, 15) sont articulées au niveau de côtés opposés, de sorte qu'elles restent parallèles l'une à l'autre lorsqu'une force est exercée.

5. Dispositif selon la revendication 4, dans lequel l'actionneur prend la forme d'un vérin pneumatique.

6. Dispositif selon l'une quelconque des revendications précédentes, comprenant :
- une quatrième courroie de transport (4), disposée au niveau de l'extrémité aval de la paire de courroies de transport (1, 2), destinée à recevoir de la pâte acheminée par la paire de courroies de transport (1, 2), dans lequel
- le système d'entraînement de la troisième courroie de transport (3) et le système d'entraînement de la paire de courroies de transport (1, 2) sont configurés pour déplacer l'extrémité aval de la paire de courroies de transport de façon à l'éloigner et à la rapprocher, en alternance, de l'extrémité amont de la troisième courroie de transport (3), afin de déposer de la pâte en zigzag sur la quatrième courroie de transport (4).

7. Dispositif selon la revendication 6, dans lequel les moyens d'entraînement sont configurés pour maintenir l'extrémité aval de la paire de courroies de transport (1, 2) à une distance fixe de la quatrième courroie de transport (4).

8. Dispositif selon l'une quelconque des revendications précédentes, dans lequel la paire de courroies de transport (1, 2) est uniquement supportée au niveau de son axe de rotation, de telle sorte que les courroies de transport soient accessibles à des fins d'entretien.

9. Dispositif selon l'une quelconque des revendications précédentes, dans lequel le système d'entraînement destiné à faire osciller la paire de courroies de transport (1, 2) comprend un arbre d'entraînement, accouplé à un actionneur en dehors d'une zone d'acheminement de pâte.

10. Dispositif selon l'une quelconque des revendications précédentes, dans lequel un système d'entraînement destiné à entraîner la paire de courroies de transport (1, 2) afin d'acheminer la pâte est situé en dehors d'une zone d'acheminement de pâte.

11. Dispositif selon la revendication 10, dans lequel une transmission destinée à entraîner les courroies de transport afin d'acheminer la pâte comprend une courroie crantée.

12. Dispositif selon l'une quelconque des revendications précédentes, dans lequel la paire de courroies de transport (1, 2) est équilibrée pour son support horizontal par une suspension.

13. Dispositif selon la revendication 12, dans lequel la suspension est une suspension pneumatique.

14. Procédé pour laminer de la pâte, comprenant :
- acheminer de la pâte prise en sandwich entre une paire de courroies de transport (1, 2) mutuellement espacées,
- faire osciller la paire de courroies de transport (1, 2) autour d'un axe de rotation (5) vers leur extrémité amont (7),
- appliquer une force ajustable entre les courroies de transport (1, 2) mutuellement espacées, la pâte étant acheminée à la paire de courroies de transport (1, 2) mutuellement espacées par une troisième courroie de transport (3), et
- faire osciller la troisième courroie de transport (3) autour d'un axe de rotation (9) vers son extrémité amont ;
dans lequel l'extrémité amont (7) de la paire de courroies de transport (1, 2) est articulée au niveau de l'extrémité aval de la troisième courroie de transport (3).
